# EUROPÄISCHE PATENTANMELDUNG

(11) **EP 0 982 833 A2**
(43) Veröffentlichungstag der Anmeldung: **01.03.2000**
(21) Anmeldenummer: 99115969.0
(22) Anmeldetag: 13.08.1999
(51) Int. Cl.: H02J 9/06, H02J 7/00

(54) **Kommunikationsgerät mit Notfallbatterie sowie Verfahren zum Einrichten desselben**

(30) Priorität: 25.08.1998 DE 19838662
(71) Anmelder: NOKIA MOBILE PHONES LTD., 02150 Espoo (FI)
(72) Erfinder: Brisse, Konrad, 45527 Hattingen (DE)
(74) Vertreter: TER MEER STEINMEISTER & PARTNER GbR

(57) **Zusammenfassung**

Die Erfindung beschreibt ein Kommunikationsgerät (2) mit einer einsetzbaren Notfallbatterie (10), die mit einer elektronisch auslesbaren Soll-Codierung versehen ist; einer Leseeinrichtung (11) zur Erkennung der Soll-Codierung oder einer anderen Codierung; einer Signalerzeugungseinrichtung (11) zum Erzeugen eines Neubatterie-Kennungssignals bei erkannter Soll-Codierung; und einer Schreibeinrichtung (11, T) die nach Erkennung der Soll-Codierung diese in die andere Codierung umwandelt.

## Beschreibung

Die Erfindung bezieht sieh auf ein Verfahren zum Einrichten eines Kommunikationsgeräts mit einer Notfallbatterie, aufein derartiges Kommunikationsgerät sowie auf ein für das Kommunikationsgerät vorgesehenes Batteriepack.

Als Kommunikationsgerät im Sinne der vorliegenden Erfindung können unterschiedliche Vorrichtungen verstanden werden. So kann es sich bei dem Kommunikationsgerät zum Beispiel um ein solches für eine Autotelefonanlage handeln, wobei das Kommunikationsgerät dann hauptsächlich von der Batterie des Kraftfahrzeugs gespeist wird und in Verbindung mit einem Telefonhandapparat sowie mit mehreren Antennen steht, von denen eine eine Notfallantenne sein kann, die sich vorzugsweise im Innern des Kraftfahrzeugs befindet. Bei den anderen Antennen, die außen am Kraftfahrzeug angeordnet sind, kann es sich zum Beispiel um eine GSM (Global System for Mobil Communication)-Antenne oder um eine GPS (Global Positioning System)- Antenne handeln.

Andererseits kann unter einem Kommunikationsgerät im Sinne der Erfindung aber auch ein tragbares Funktelefon bzw. Handy verstanden werden, das neben der normalen Batterie eine Notfallbatterie aufweist.

Derartige Kommunikationsgeräte werden heutzutage immer mehr dazu benutzt, auch sicherheitsrelevante Dienste zur Verfügung zu stellen. Bei diesen sicherheitsrelevanten Diensten kann es sich um das Absenden bestimmter Hilfesignale an eine Servicestation bzw. Hilfsorganisation handeln, so daß sichergestellt sein muß, daß zum Beispiel auch nach einem Kraftfahrzeugunfall oder nach längerer Betriebsdauer der Hauptversorgungsbatterie das Aussenden derartiger Hilfesignale noch möglich ist.

Ist eine Notfallsituation eingetreten und die Hauptversorgungsbatterie nicht mehr betriebsbereit, so wird im allgemeinen auf die Notfallbatterie umgeschaltet. Dabei wird davon ausgegangen, daß dann die Notfallbatterie noch genügend Energie liefern kann, um die Hilfesignale abzusetzen.

In der Regel wird die Notfallbatterie ständig auf ihren Ladezustand hin überwacht, wobei die diesbezügliche Information in einem Speicher zwischengespeichert wird. Fällt der Ladezustand ab oder ist ein Batterieaustausch erforderlich, so kann dies durch entsprechende Warnsignale angezeigt werden. In diesem Fall sollte die alte Notfallbatterie durch eine neue Notfallbatterie ersetzt werden, da nur dann gewährleistet ist, daß erforderlichenfalls Hilfesignale auch über einen längeren Zeitraum gesendet werden können.

Der Erfindung liegt die Aufgabe zugrunde, zur Überprüfung einer in ein Kommunikationsgerät eingesetzten Notfallbatterie auf bisher noch nicht erfolgten Gebrauch ein hierzu geeignetes Verfahren sowie ein geeignetes Kommunikationsgerät und nicht zuletzt ein an diesen Zweck angepaßtes Batteriepack für das Kommunikationsgerät anzugeben.

Die entsprechenden Lösungen finden sich in den Ansprüchen 1, 11 und 19. Vorteilhafte Ausgestaltungen der Erfindung sind den jeweils nachgeordneten Unteransprüchen zu entnehmen.

Ein erfindungsgemäßes Verfahren zum Einrichten eines Kommunikationsgeräts umfaßt folgende Schritte: In das Kommunikationsgerät wird eine Notfallbatterie eingesetzt, die mit einer elektronisch auslesbaren Soll-Codierung versehen ist; weist bei einem anschließenden Lesevorgang die Notfallbatterie die Soll-Codierung auf, wird ein Neubatterie-Kennungssignal erzeugt; und es wird nach Erkennung der Soll-Codierung diese in eine andere Codierung umgewandelt.

Wird mit anderen Worten eine noch nicht benutzte und fabrikneue Notfallbatterie in das Kommunikationsgerät eingesetzt, so wird diese zunächst durch die Erkennung der Soll-Codierung akzeptiert, jedoch anschließend sofort entwertet, indem die Soll-Codierung verändert und durch die andere Codierung ersetzt wird. Auf die eingesetzte Notfallbatterie kann jetzt jederzeit Im Notfall zurückgegriffen werden. Sie gewährleistet volle Betriebsbereitschaft des Kommunikationsgeräts, da bisher noch keine Entladung der Notfallbatterie stattgefunden hat.

Die Verwendung einer Notfallbatterie, die nicht mehr die Soll-Codierung aufweist, läßt sich somit unter bestimmten Umständen verhindern. Denkbar wären mehrere Fälle.

Würde eine eingesetzte neue Notfallbatterie zum Beispiel aus dem Kommunikationsgerät herausgenommen und sofort wieder eingesetzt werden, und würde mit jedem neuen Einsetzen einer Notfallbatterie das Auslesen der Soll-Codierung neu initiiert werden, so würde die dann zum zweiten Mal in das Kommunikationsgerät eingesetzte Notfallbatterie nicht mehr von diesem akzeptiert werden, da sie nicht mehr über die Soll-Codierung verfügt. Diese wurde ja beim ersten Einsetzen in die andere Codierung umgewandelt, so daß beim zweiten Einsetzen nicht mehr das Neubatterie-Kennungssignal erzeugt wird. Vielmehr könnte jetzt ein Warnsignal ausgegeben und der Benutzer aufgefordert werden, eine wirklich neue Notfallbatterie mit noch vorhandener Soll-Codierung einzusetzen.

Denkbar wäre aber auch, nach dem ersten Einsetzen einer neuen Notfallbatterie und Auslesen ihrer Soll-Codierung weitere Auslesezyklen der Soll-Codierung für einen bestimmten Zeitraum zu unterbinden, so daß in diesem Zeitraum ein kurzzeitiges Herausnehmen und Wiedereinsetzen der Notfallbatterie möglich wäre, ohne daß ein Warnsignal erzeugt wird. In diesem Fall muß jedoch auf andere Weise sichergestellt werden, daß die neueingesetzte und keine Soll-Codierung mehr aufweisende Notfallbatterie noch über einen hinreichend guten Ladezustand verfügt. Das Ende des bestimmten Zeitraums tritt dann ein, wenn die Einrichtung ein Neubatterie-Anforderungssignal erzeugt, also den Austausch der Notfallbatterie anmahnt. Das Neubatterie-Anforderungssignal wird zum Beispiel dann erzeugt, wenn eine gegebene Zahl von Notfalleinsätzen erfolgt ist, die Betriebsdauer einen vorbestimmten Wert erreicht hat, die Leerlaufspannung der Notfallbatterie auf Null abgesunken ist, usw. Die Schutzfunktion, die durch Umwandeln der Soll-Codierung in die andere Codierung erzielt wird, würde dann in diesem Fall erst nach Ablauf des bestimmten Zeitraums eintreten.

Das Neubatterie-Kennungssignal kann zum Beispiel zwischengespeichert werden und würde Im zuletzt genannten Fall erst nach Ablauf des vorbestimmten Zeitraums gelöscht werden.

In einem Speicher kann dem Ladezustand der Notfallbatterie entsprechende Information gespeichert werden, wobei der Speicher auch einen Zähler enthalten kann, der zum Beispiel die Betriebsdauer der Notfallbatterie speichert, etwa durch Zählen der Betriebsstunden. Dabei kann das Neubatterie-Anfordungssignal erzeugt werden, nachdem der Ladezustand der Notfallbatterie einen vorbestimmten Wert unterschritten bzw. deren Betriebsdauer einen weiteren vorbestimmten Wert überschritten hat. Ein Lesevorgang zum Auslesen der Soll-Codierung der Notfallbatterie kann daher in Abhängigkeit des Neubatterie-Anforderungssignals ausgeführt werden, beispielsweise mit dem Erscheinen des Neubatterie-Anfordungssignals. Das Neubatterie-Anforderungssignal legt somit das Ende des bereits zuvor erwähnten Zeitraums fest, wonach die volle Schutzfunktion erzielt wird.

Nach einer vorteilhaften Ausgestaltung der Erfindung wird nach der Erkennung der Soll-Codierung der Notfallbatterie der Speicher, in dem Information über den Ladezustand der zuvor verwendeten Notfallbatterie gespeichert ist, gelöscht, um jetzt Information über den Ladezustand der neu eingesetzten Notfallbatterie speichern zu können. Statt zu löschen, könnte die Information auf einem weiteren Speicher abgelegt werden, um eine spätere Überprüfung sämtlicher Betriebszustände der Einrichtung, falls dies erforderlich ist, zu ermöglichen.

Die Soll-Codierung kann zum Beispiel in einem programmierbaren elektronischen Speicher enthalten sein, der nach Erzeugung des Neubatterie-Kennungssignals umprogrammiert wird, so daß er jetzt nicht mehr die Soll-Codierung sondern die andere bzw. umgewandelte Codierung enthält.

Alternativ könnte die Soll-Codierung aber auch durch eine leitende Sicherung gegeben sein, wobei nach Erkennung der Soll-Codierung die Sicherung unterbrochen wird. Im Falle einer Schmelzsicherung ließe sich die Sicherung zu diesem Zweck durchbrennen.

Ein erfindungsgemäßes Kommunikationsgerät enthält eine einsetzbare Notfallbatterie, die mit einer elektronisch auslesbaren Soll-Codierung versehen ist; eine Leseeinrichtung zur Erkennung der Soll-Codierung oder einer anderen Codierung; eine Signalerzeugungseinrichtung zum Erzeugen eines Neubatterie-Kennungssignals bei erkannter Soll-Codierung und ggf. eines Warnsignals bei nicht erkannter Soll-Codierung; sowie eine Schreibeinrichtung, die nach Erkennung der Soll-Codierung diese in die andere Codierung umwandelt.

Die Notfallbatterie selbst kann eine oder mehrere Batteriezellen enthalten. Dabei ist vorzugsweise und nicht zuletzt aus wirtschaftlichen Gründen für alle Batteriezellen nur eine einzige Soll-Codierung vorgesehen. Durch Abfrage der Soll-Codierung werden also sämtliche Batteriezellen gleichzeitig geprüft. Dabei kann die elektrisch auslesbare Soll-Codierung zum Beispiel an einer dieser Batteriezellen unmittelbar angeordnet sein. Es ist aber auch möglich, die elektronisch auslesbare Soll-Codierung an einem Batteriepack anzubringen, in welchem sich die Batteriezellen befinden. Fabrikseitig wird dann dieses Batteriepack mit den Batteriezellen und der integrierten Soll-Codierung geliefert.

Ein besonders vorteilhaftes Batteriepack weist ein die Batteriezellen aufnehmendes Gehäuse auf, an dem die elektronisch auslesbare Soll-Codierung angebracht ist. Bei diesem Gehäuse kann es sich auch um eine Schrumpffolie oder ein anderes geeignetes Behältnis handeln. Dabei kann sich die Soll-Codierung im Innern des Batteriepacks befinden, so daß sie nicht so ohne weiteres beschädigt werden kann. Das Batteriepack selbst weist zwei Versorgungsanschlüsse (+ und -) auf, zwischen denen die Pole der Batteriezellen liegen und die mit entsprechenden Anschlüssen des Kommunikationsgeräts verbindbar sind. Darüber hinaus kann sich vorzugsweise am Batteriepack ein dritter Anschluß befinden, zwischen dem und einem der anderen der Batterieanschlüsse die Soll-Codierung etwa in Form einer Schmelzsicherung vorhanden ist.

Ein Ausführungsbeispiel der Erfindung wird nachfolgend unter Bezugnahme auf die Zeichnung im einzelnen erläutert. Es zeigen:
**Figur 1** ein mit einer Kommunikationsplattform ausgerüstetes Kraftfahrzeug; und
**Figur 2** ein Schaltungsdiagramm eines Teils der Kommunikationsplattform nach Figur 1.

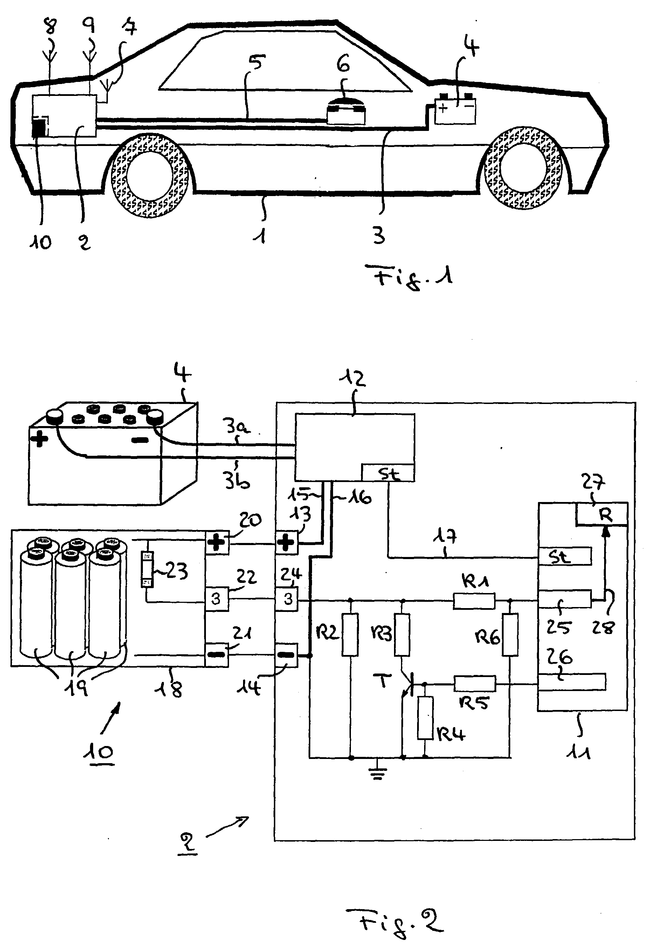

Die Figur 1 zeigt ein Kraftfahrzeug 1 mit einer eingebauten Kommunikationsplattform. Zur Kommunikationsplattform gehören ein im Kofferraum des Kraftfahrzeugs 1 untergebrachtes Kommunikationsgerät 2, das im Normalfall über eine Leitung 3 mit Energie von der Batterie 4 des Kraftfahrzeugs 1 versorgt wird. Mit dem Kommunikationsgerät 2 ist ferner über eine Leitung 5 ein Telefonhandapparat 6 verbunden. Es kann sich hier um einen herkömmlichen Telefonhandapparat mit Auflage für einen Sprechhörer handeln oder um eine ähnliche Kommunikationseinrichtung. Ferner sind mit dem Kommunikationsgerät 2 mehrere Antennen verbunden, von denen die eine eine Notfallantenne 7 ist, die sich im Innern des Kraftfahrzeugs 1 befindet. Bei den anderen Antennen 8 und 9 kann es sich um eine GSM-Antenne sowie um eine GPS-Antenne handeln. Weiterhin kann das Kommunikationsgerät 2 mit einem nicht dargestellten Monitor für den Fahrer des Kraftfahrzeugs 1 verbunden sein, um diesem zum Beispiel geographische Positionsangaben oder andere Information optisch oder akustisch übermitteln zu können.

Nicht zuletzt befindet sich innerhalb des Kommunikationsgeräts 2 eine Notfallbatterie 10, die jedoch nur dann das Kommunikationsgerät 2 mit Energie versorgt, wenn ein Notfall aufgetreten ist. Dabei kann es sich zum Beispiel um einen Kraftfahrzeugunfall handeln, bei dem die Antennen 8 und 9 beschädigt und/oder die Batterie 4 vom Kommunikationsgerät 2 abgetrennt worden sind. In diesem Fall könnte das Kommunikationsgerät 2, sofern noch betriebsfähig, ein Hilfesignal über die Notfallantenne 7 absenden. Dies könnte automatisch bei Vorliegen vorbestimmter Bedingungen oder ggf. noch durch den Fahrer des Kraftfahrzeugs 1 erfolgen.

Ansonsten kann der Fahrer des Kraftfahrzeugs 1 unter Steuerung des Kommunikationsgeräts 2 sowie unter Verwendung des Telefonhandapparats 6 und unter Einsatz der Antennen 8 und 9 mit Dritten kommunizieren.

Die Figur 2 zeigt ein Schaltungsdiagramm eines Teils des Kommunikationsgeräts 2 in Verbindung mit der Kraftfahrzeugbatterie 4 und der Notfallbatterie 10.

Das Kommunikationsgerät 2 enthält u. a. eine Mikroprozessorsteuerung 11 zum Aufbau von Kommunikationsverbindungen mit anderen Teilnehmern sowie eine Energiemanagementschaltung 12. Mit der Energiemanagementschaltung 12 ist die bereits erwähnte Kraftfahrzeugbatterie 4 über Leitungen 3a und 3b verbunden. Darüber hinaus ist die Energiemanagementschaltung 12 mit einer positiven Klemme 13 und einer negativen Klemme 14 des Kommunikationsgeräts 2 über Leitungen 15 und 16 verbunden. An die positive und die negative Klemme 13, 14 ist die Notfallbatterie 10 anschließbar, wie noch beschrieben wird. Über eine Steuerleitung 17 zwischen einem Steueranschluß der Mikroprozessorsteuerung 11 und einem Steueranschluß der Energiemanagementschaltung 12 empfängt letztere ein Steuersignal, anhand dessen die Energiemanagementschaltung 12 entscheidet, ob Energie von der Autobatterie 4 oder von der Notfallbatterie 10 bezogen wird. Das auf der Steuerleitung 17 anliegende Steuersignal wird erzeugt, wenn eine Notfallsituation eingetreten ist, so daß dann die Energiemanagementschaltung 12 von der Autobatterie 4 auf die Notfallbatterie 10 umschaltet und von dort Energie zur Speisung der Kommunikationsplattform bzw. des Kommunikationsgeräts 2 bezieht.

Die Notfallbatterie 10 besteht aus einem Gehäuse 18, in welchem sich im vorliegenden Fall beispielsweise sechs Batteriezellen 19 befinden, die in vorbestimmter Weise miteinander verschaltet sind. Außen am Gehäuse 18 befinden sich zwei Kontakte 20 und 21, von denen der Kontakt 20 mit einempositiven Pol der Batteriezellen 19 verbunden ist und der Kontakt 21 mit einem negativen Pol. Wird die Notfallbatterie 10 (Batteriepack) in das Kommunikationsgerät eingesetzt, kommen die Kontakte 20 und 13 einerseits und die Kontakte 21 und 14 andererseits in elektrischen Kontakt, so daß Energie von der Energiemanagementschaltung 12 für den besagten Notfall aus den Batteriezellen 19 bezogen werden kann.

Am Gehäuse 18 der Notfallbatterie 10 ist darüber hinaus ein weiterer Kontakt 22 vorgesehen, der über eine Sicherung 23 mit dem positiven Kontakt 20 in elektrischer Verbindung steht. Im vorliegenden Fall handelt es sich bei der Sicherung um eine Schmelzsicherung, die im leitenden Zustand quasi eine Soll-Codierung zur Verfügung stellt. Wird das Gehäuse 18 in das Kommunikationsgerät 2 eingesetzt, so kommt ferner der weitere Kontakt 22 mit einem noch weiteren Kontakt 24 des Kommunikationsgeräts 2 in elektrischen Kontakt, wobei dieser Kontakt 24 mit einem Signaleingang 25 der Mikroprozessorsteuerung 11 in Verbindung steht.

Die Mikroprozessorsteuerung 11 ist mit einem Signalausgang 26 versehen, an dem ein Befehl zum Durchbrennen der Sicherung 23 erscheint, nachdem am Signaleingang 25 festgestellt worden ist, daß die Sicherung 23 der eingesetzten Notfallbatterie 10 noch nicht durchgeschmolzen worden ist. Innerhalb der Mikroprozessorsteuerung 11 befindet sich darüber hinaus u. a. noch eine Speichereinrichtung 27, die mit dem Signaleingang 25 über eine Leitung 28 verbunden ist und zur Speicherung von Betriebsdaten der Notfallbatterie 10 dient, diewährend der Zeit gesammelt werden, in der sich die Notfallbatterie 10 im Kommunikationsgerät 2 befindet und in Betrieb ist. Die entsprechenden Verbindungsleitungen sind hier der Übersicht wegen nicht dargestellt. Die Leitung 28 überträgt lediglich ein Rücksetzsignal an einen Rücksetzeingang R der Speichereinrichtung 27, um deren Inhalt zu löschen bzw. zurückzusetzen, wie noch beschrieben wird.

Um die Soll-Codierung der Sicherung 23 auslesen zu können und um ferner die Sicherung 23 durchbrennen zu können, befindet sich zwischen den Kontakten 24 und 14 einerseits sowie den Kontakten 25 und 26 andererseits eine weitere Schaltungseinrichtung. Diese Schaltungseinrichtung dient u. a. also zum Lesen und Ändern der Soll-Codierung bzw. zum Lesen und Ändern des Zustands der Sicherung 23, die sich geschützt im Innern des Gehäuses 18 der Notfallbatterie 10 befindet.

Die genannte Schaltung umfaßt einen ersten Widerstand R1 zwischen den Kontakten 24 und 25, einen zweiten Widerstand R2 zwischen den Kontakten 24 und 14, eine parallel zum zweiten Widerstand R2 liegende Reihenschaltung aus einem dritten Widerstand R3 und einer Kollektor-Emitter-Strecke eines Transistors T, einen vierten Widerstand R4 zwischen der Basis des Transistors T und seinem Emitter, einen fünften Widerstand R5 zwischen der Basis des Transistors T und dem Signalausgang 26 der Mikroprozessorsteuerung 11, und einen sechsten Widerstand R6 zwischen dem Signaleingang 25 der Mikroprozessorsteuerung 11 und dem Emitter des Transistors T, wobei der Emitter ferner geerdet ist.

Nachfolgend soll die Wirkungsweise der in Figur 2 gezeigten Schaltung näher erläutert werden.

Zunächst sei angenommen, daß eine Notfallbatterie 10 mit noch nicht durchgeschmolzener Sicherung 23 in das Kommunikationsgerät 2 eingesetzt worden ist. Die Energiemanagementschaltung 12 empfängt dabei Energie von der Autobatterie 4. Infolge der noch nicht durchgeschmolzenen Sicherung 23 wird positives Potential von den Batteriezellen zum Kontakt 22 geliefert und von diesem über den Kontakt 24 und den Widerstand R1 zum Signaleingang 25 der Mikroprozessorsteuerung 11. Infolge des empfangenen positiven Signals am Signaleingang 25, das als Neubatterie-Kennungssignal angesehen werden kann, wird über die Leitung 28 die Speichereinrichtung 27 zurückgesetzt, so daß alle Daten bezüglich einer vorher verwendeten Notfallbatterie gelöscht werden. In Zukunft werden dann Betriebsdaten der neueingesetzten Notfallbatterie 10, die deren Ladezustand beschreiben, in der Speichereinrichtung 27 gespeichert.

Nachdem positives Potential am Signaleingang 25 bzw. das Neubatterie-Kennungssignal detektiert worden ist, wird durch die Mikroprozessorsteuerung 11 ein Löschsignal über den Signalausgang 26 ausgegeben. Dieses Löschsignal gelangt über den Widerstand R5 zur Basis des Transistors T und schaltet diesen durch. Da am Kontakt 24 noch hohes positives Potential anliegt, fließt nunmehr ein relativ großer Strom über den Widerstand R3 und die Emitter-Basis-Strecke des Transistors T zur Masse, was bewirkt, daß die Sicherung 23 durchbrennt. Danach liegt an den Kontakten 22, 24 und 25 niedriges Potential an. Das Neubatterie-Kennungssignal bleibt jedoch zwischengespeichert, solange der Ladezustand der Notfallbatterie 10 noch ausreichend ist, das Neubatterie-Anforderungssignal also noch nicht erzeugt worden ist.

Wird die Notfallbatterie 10 aus dem Kommunikationsgerät 2 herausgenommen, nachdem das Neubatterie-Anforderungssignal erzeugt worden ist und das Neubatterie-Kennungssignal gelöscht wurde, werden die Kontakte 20, 22 und 21 von den Kontakten 13, 24 und 14 getrennt. Wird dieselbe Notfallbatterie 10 oder eine ähnliche, aber bereits gebrauchte Notfallbatterie wieder in das Kommunikationsgerät 2 eingesetzt, also eine solche, bei der die Sicherung 23 bereits durchgeschmolzen ist, erscheint jetzt kein auf positivem Pegel liegendes Signal bzw. Neubatterie-Kennungssignal am Signaleingang 25. Dies ist ein Hinweis darauf, daß eine gebrauchte Notfallbatterie und keine fabrikneue eingesetzt worden ist. Es erscheint vielmehr ein Warnsignal, das dem Benutzer anzeigt, daß die bereits gebrauchte Notfallbatterie erneut ausgetauscht werden muß.

Das Warnsignal kann zum Beispiel dann erzeugt werden kann, wenn das auf hohem Pegel liegende positive Signal nur am Kontakt 13 erscheint und am Kontakt 24 kein Signal bzw. ein auf Masse liegendes Signal erscheint.

## Patentansprüche

1. Verfahren zum Einrichten eines Kommunikationsgeräts (2), mit folgenden Schritten:
- in das Kommunikationsgerät (2) wird eine Notfallbatterie (10) eingesetzt, die mit einer elektronisch auslesbaren Soll-Codierung versehen ist;
- weist bei einem anschließenden Lesevorgang die Notfallbatterie (10) die Soll-Codierung auf, wird ein Neubatterie-Kennungssignals erzeugt;
- nach Erkennung der Soll-Codierung wird diese in eine andere Codierung umgewandelt.

2. Verfahren nach Anspruch 1, **dadurch gekennzeichnet,** daß ein Warnsignal erzeugt wird, wenn beim Lesevorgang die Soll-Codierung nicht erkannt wird.

3. Verfahren nach Anspruch 1 oder 2, **dadurch gekennzeichnet,** daß dem Ladezustand der Notfallbatterie (10) entsprechende Information in einem Speicher (27) gespeichert wird.

4. Verfahren nachAnspruch 1, 2 oder 3, **dadurch gekennzeichnet,** daß der Speicher einen Zähler (27) enthält, der die Betreibsdauer der Notfallbatterie (10) zählt.

5. Verfahren nach Anspruch 3 oder 4, **dadurch gekennzeichnet,** daß ein Neubatterie-Anforderungssignal erzeugt wird, nachdem der Ladezustand der Notfallbatterie (10) einen vorbestimmten Wert unterschritten bzw. deren Betriebsdauer einen weiteren vorbestimmten Wert überschritten hat.

6. Verfahren nach Anspruch 5, **dadurch gekennzeichnet,** daß der Lesevorgang zum Auslesen der Soll-Codierung der Notfallbatterie (10) erst dann ausgeführt wird, nachdem das Neubatterie-Anforderungssignal erzeugt worden ist.

7. Verfahren nach Anspruch 6, **dadurch gekennzeichnet,** daß das Neubatterie-Kennungssignal zwischengespeichert wird.

8. Verfahren nach einem der Ansprüche 1 bis 7, **dadurch gekennzeichnet,** daß nach der Erkennung der Soll-Codierung der Speicher (27) gelöscht wird.

9. Verfahren nach einem der Ansprüche 1 bis 8, **dadurch gekennzeichnet,** daß die Soll-Codierung in einem programmierbaren elektronischen Speicher enthalten ist.

10. Verfahren nach einem der Ansprüche 1 oder 9, **dadurch gekennzeichnet,** daß die Soll-Codierung durch eine leitende Sicherung (23) gegeben ist, und daß nach Erkennung der Soll-Codierung die Sicherung (23) unterbrochen wird.

11. Kommunikationsgerät (2) mit
- einer einsetzbaren Notfallbatterie (10), die mit einer elektronisch auslesbaren Soll-Codierung versehen ist;
- einer Leseeinrichtung (11) zur Erkennung der Soll-Codierung oder einer anderen Codierung;
- einer Signalerzeugungseinrichtung (11) zum Erzeugen eines Neubatterie-Kennungssignals bei vorhandener Soll-Codierung; und
- einer Schreibeinrichtung (11, T) die nach Erkennung der Soll-Codierung diese in die andere Codierung umwandelt.

12. Kommunikationsgerät nach Anspruch 11, **dadurch gekennzeichnet,** daß mit der Notfallbatterie (10) ein programmierbarer elektronischer Speicher verbunden ist, der die Soll-Codierung enthält.

13. Kommunikationsgerät nach Anspruch 11, **dadurch gekennzeichnet,** daß mit der Notfallbatterie (10) eine Sicherung (23) verbunden ist, die im leitenden Zustand die Soll-Codierung bildet.

14. Kommunikationsgerät nach Anspruch 13, **dadurch gekennzeichnet,** daß die Sicherung (23) eine Schmelzsicherung ist.

15. Kommunikationsgerät nach Anspruch 13 oder 14, **dadurch gekennzeichnet,** daß die Schreibeinrichtung (11, T) so ausgebildet ist, daß sie nach Erkennen der Soll-Codierung einen Überstrom durch die Sicherung (23) schickt, um diese zu unterbrechen.

16. Kommunikationsgerät nach einem der Ansprüche 5 bis 9, **dadurch gekennzeichnet,** daß die Notfallbatterie (10) eine oder mehrere Batteriezellen (19) aufweist.

17. Kommunikationsgerät nach Anspruch 16, **dadurch gekennzeichnet,** daß die elektronisch auslesbare Soll-Codierung an wenigstens einer der Batteriezellen (19) unmittelbar angebracht ist.

18. Kommunikationseinrichtung nach Anspruch 16, **dadurch gekennzeichnet,** daß die elektronisch auslesbare Soll-Codierung an einem Batteriepack (18) angebracht ist, in welchem die Batteriezellen (19) enthalten sind.

19. Batteriepack mit mehreren Batteriezellen (19) und einem diese umgebenden Gehäuse (18), **gekennzeichnet durch** eine am Gehäuse (18) angebrachte elektronisch auslesbare, änderbare Soll-Codierung.

20. Batteriepack nach Anspruch 19, **dadurch gekennzeichnet,** daß die Soll-Codierung in Form einer leitenden Sicherung (23) vorliegt.

21. Batteriepack nach Anspruch 20, **dadurch gekennzeichnet,** daß die Sicherung (23) eine Schmelzsicherung ist.

22. Batteriepack nach Anspruch 20 oder 21, **dadurch gekennzeichnet,** daß die Sicherung (23) zwischen einem (20) der Batterieanschlüsse (20, 21) des Batteriepacks und einem dritten Anschluß (22) des Batteriepacks liegt.
